Europäisches Patentamt

European Patent Office

Office européen des brevets

(11) Publication number: **0 204 673**
A2

# (12) EUROPEAN PATENT APPLICATION

(21) Application number: **86850156.0**

(22) Date of filing: **29.04.86**

(51) Int. Cl.⁴: **B 08 B 3/02**

(30) Priority: **03.05.85 SE 8502152**

(43) Date of publication of application:
**10.12.86 Bulletin 86/50**

(84) Designated Contracting States:
**DE FR GB IT SE**

(71) Applicant: **AKTIEBOLAGET ELECTROLUX**
**Luxbacken 1**
**S-105 45 Stockholm(SE)**

(72) Inventor: **Ungerth, Bernt Hakan**
**Kullenshusväg 6**
**S-523 00 Torslanda(SE)**

(74) Representative: **Hagelbäck, Evert Isidor et al,**
**c/o AB Electrolux Patentavdelningen**
**S-105 45 Stockholm(SE)**

(54) Device in a high pressure cleaning unit.

(57) The invention relates to a device in a high pressure cleaning unit comprising high pressure pump which via a pipe connection is connected to a nozzle through which liquid can flow out towards the surface which is to be cleaned. Between the pump and the nozzle an injector is placed by means of which cleaning agents or the like can be injected into the liquid. The injector has a by pass conduit through which the liquid when acting on an operating device under high pressure can pass the injector to the nozzle. In the pipe connection an injector 25 for air is inserted.

Device in a high pressure cleaning unit

This invention relates to a device in a high pressure cleaning unit comprising a high pressure pump which via a pipe connection is connected to a nozzle through which liquid can flow out towards the surface which is to be cleaned an injector being placed between the pump and the nozzle by means of which a cleaning agent or the like can be injected into the liquid and the injector having a by-pass conduit through which the liquid, by acting on an operating device, at a high pressure can pass the injector to the nozzle.

Devices of the above type are previously known and have been widely used within the cleaning business. Thus, stationary as well as mobile units are used to clean industrial premises, hospitals, commercial kitchens, slaughter houses and so on.

A stationary unit can for instance comprise a pump station which delivers water having a working pressure of 50 bar through pipes to the premises where the cleaning takes place. In the premises there are high pressure stations with containers for cleaning agents and spray wands with pistol handles. The containers and other equipment which is necessary can alternatively be placed on a carriage for moving between the different stations. By operating the pistol handle cleaning agents can be injected in the water flowing to the spray wand and this takes place at a pressure of about 4 bar and with very little water consumption for instance 4l/minute. In order to rinse the cleaning agent together with the solved dirt the injection is stoped by operating the pistol handle and water at a pressure of about 50 bar is transmitted to the spray wand which means a flow or for instance 15l/minute.

For certain cleaning purposes it is desirable to apply cleaning agents in the form of a foam layer on the surface to be cleaned. This has until now been done manually or with particular machines which are adapted for this purpose.

The purpose of this invention is make it possible to apply cleaning agents in the form of foam with the first mentioned type of equipment. This is achieved in a device as it is defined in the following claims.

An embodiment of the invention will now be described with reference to the accompanied drawing which schematically shows a device according to the invention where 10 is a high pressure pump which via a conduit 11 is connected to an injector 12. From the pipe 11 a return pipe 13 being provided with a release valve 14 extends to the inlet side of the pump 10. The release valve is opened when the pressure on the pressure side of the pump exceeds a preset value. The suction side of the injector 12 via a conduit 15 is connected to a multiple way valve 16 by means of which any of the containers 17 or 18 can be connected with the injector 12. The containers 17,18 can for example contain a cleaning - and rinsing agent respectively. The conduit 11 is connected to a by pass conduit 19,20 in which a check valve 21 is placed. This check valve is operated between open and closed position by a control unit 22 which via a conduit 23 is connected to the part 20 of the by pass conduit which is placed downstream the valve 21. The by pass conduit 19,20 ends in a conduit 24 which connects the injector 12 with an air injector 25. The suction side of the air injector 25 is via a conduit 26, having a check valve 27, a reducing valve 28 and a cut off valve 29 connected to atmosphere. For the creation of good foam the reducing valve is preferably so set that the pressure is about 0,5 bar below the pressure of the injector 12. The outlet side of the air injector 25 is connected to a conduit 30 to which two spray wands 31 and 32 respectively each with a hose 33 and 34 can be connected via a connecting part 35. The spray wand 31 has a nozzle 36 through which the water flows and a valve 37 to close and open respectively the connection between the hose 33 and the nozzle 36. Moreover the spray wand has a drainage valve 38 through which water leaves directly to atmosphere.

The spray wand 32 as well as the spray wand 31 has a nozzle 39 and shut off valve 40. However, this spray wand however, contrary to the spray wand 31 has a very large nozzle opening which always gives a low pressure, that is in the magnitude of 3 - 4 bar. The spray wand 31 is used in normal cleaning and rinsing procedures whereas the spray wand 32 is used for applying foam.

When connecting the spray wand 31 and the pump 10 with closed valves 37,38 on the spray wand 31 and with the shut off valve 29 of the air injector 25 closed the same high pressure is achieved in the complete pipe system that is the pressure which is present in the conduit 11. This means that also the conduit 23 is under influence of the high pressure and acts on the control unit 22 so that the check valve 21 is opened. If then the valve 37 is opened water under high pressure will flow out through the nozzle 36, the opening in the nozzle 36 having such a size that the pressure is upheld in the conduits 30,24,20 and 23 respectively thereby keeping the check valve 21 in open position.

If injection of a cleaning agent is desired the valve 38 is opened momentarily whereby water flows through the valve and the pressure decreases in the conduits 30,20 and 23 respectively. This means that the control unit 22 closes the check valve 21 and the flow through the by pass valve 19,20 stops. Instead the water is pressed through the injector 12 thereby sucking a cleaning agent from one of the containers 17 or 18. Thus, a cleaning agent can be applied under low pressure and with small water consumption. By momentarily shutting off the valve 37 the high pressure water can then in the way which has been described above be supplied through the nozzle 36 for rinsing.

In case it is desirable to apply a cleaning agent in the form of foam the spray wand 32 is connected to the connecting part 35 after which the shut off valve 29 and the valve 40 are opened. Thereby air flows through the pipe 26 in the air injector 25 and mixes with the cleaning agent-water mixture. The air then follows the liquid to the spray wand and leaves through the nozzle 39 and creates foam. Such an applying of foam is used when the reaction time for the cleaning agent has to be extended since the surfaces to be cleaned are placed so that the cleaning agent flows off too rapidly or when the cleaning agent contains aerosols or free cloride which should not be inhaled.

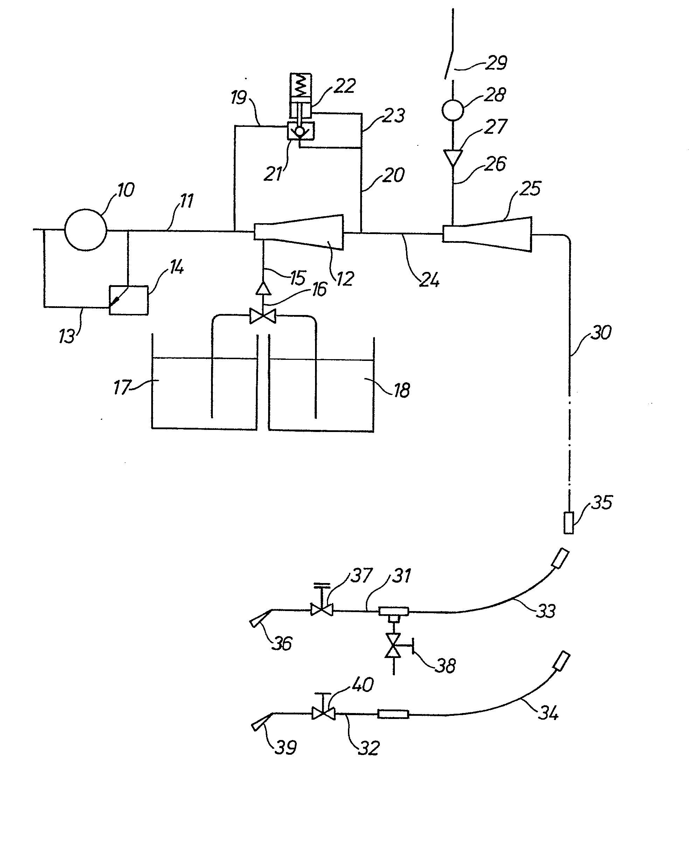

## Claims

1. Device in a high pressure cleaning unit comprising a high pressure pump which via a pipe connection is connected to a nozzle through which liquid can flow out towards the surface which is to be cleaned an injector being placed between the pump and the nozzle by means of which a cleaning agent or the like can be injected into the liquid and the injector having conduit through which the liquid, by acting on an operating device, at a high pressure can pass the injector to the nozzle, c h a r c t e r i z e d in that an injector (25) for air is inserted into said pipe connection.

2. Device according to claim 1, c h a r c t e r i z e d in that the air injector is inserted after the first mentioned injector (12) seen in the flow direction of the liquid.

3. Device according to claim 1 or 2, c h a r c t e r i z e d in that the suction side of the injector (25) is connected to atmosphere.

4. Device according to any of the preceeding claims, c h a r a c t e r - i z e d in that the suction side of the air injector (25) is provided with a check valve (27).

5. Device according to any of the preceeding claims, c h a r a c t e r - i z e d in that the suction side of the air injector (25) has a shut off valve (29).

6. Device according to any of the preceeding claims, c h a r a c t e r - i z e d in that the suction side of the air injector (25) has a reducing valve (28).

7. Device according to any of the preceeding claims, c h a r a c t e r - i z e d in that at least two spray wands (31,32) with nozzle openings of different sizes can be connected to the pipe connection the spray wand (32) with the larger nozzle opening being used during the mixture of air for applying foam whereas the spray wand (31) with the smaller nozzle opening is used for high pressure cleaning and conventional applying of cleaning agents respectively.